Europäisches Patentamt

(19) European Patent Office

Office européen des brevets

(11) Publication number: **0 025 776**
**B1**

(12) **EUROPEAN PATENT SPECIFICATION**

(45) Date of publication of patent specification: **01.02.84**

(51) Int. Cl.³: **B 65 G 65/00, B 65 G 47/51**

(21) Application number: **80830038.8**

(22) Date of filing: **20.07.80**

(54) Storage plant for objects, in particular for track links.

(30) Priority: **14.09.79 IT 4010379**

(43) Date of publication of application:
**25.03.81 Bulletin 81/12**

(45) Publication of the grant of the patent:
**01.02.84 Bulletin 84/5**

(84) Designated Contracting States:
**BE DE FR GB**

(56) References cited:
**DE - A - 2 340 902**
**DE - A - 2 501 609**
**DE - A - 2 543 517**
**DE - B - 2 051 909**
**DE - C - 1 136 275**
**FR - A - 1 468 959**
**FR - A - 2 351 033**
**GB - A - 774 338**
**GB - A - 1 448 863**

(73) Proprietor: **ITALTRACTOR I.T.M. S.p.A.**
**Via Modena, 152 Loc. Settecani**
**I-41014 Castelvetro (Modena) (IT)**

(72) Inventor: **Lunardi, Alceste**
**Via del Noto n. 13**
**Roma (IT)**
Inventor: **Villani, Mauro**
**Via Corrado Ricci n. 8**
**Bologna (IT)**
Inventor: **Grilli, Walter**
**Via Monchio n. 30**
**Modena (IT)**

(74) Representative: **Bonfreschi, Mario**
**Bugnion S.p.A. Viale Trento Trieste, 25**
**I-41100 Modena (IT)**

Courier Press, Leamington Spa, England.

Storage plant for objects, in particular for track-links

The invention relates to a storage plant for single objects, and in particular, for track-links. One of its specific, though not exclusive applications is that of installation between any two consecutive processing units or centres forming part of a production line for manufacturing said objects.

In such lines, high levels of automation are involved—especially in the processing centres themselves—and an intermediate storage-point is called for between such centres so as to slow up production-tempo in at least one such centre with respect to those preceding or following.

The object of the invention described herein is that of providing a satisfactory solution to the problem as outlined above by providing a storage plant for single objects—track-links especially—offering high degrees of automation and flexibility.

A particular advantage of the invention is the facility it offers of easy introduction and withdrawal of the single objects/links from/to the outside of the plant utilising normal internal-transportation means such as trolleys, cars &c, with no hindrance whatever to the plant's normal and correct operation.

The prior art in this field embraces devices for loading and off-loading objects by means of containers which travel along a conveyor.

More precisely, German patent DE—A— 2 543.517 describes a device comprising:

— an up-line and a down-line conveyor linked together by a roller-conveyor which will, if need be, transfer objects direct from the up-line conveyor onto the down-line conveyor; and

— a container whose base exhibits parallel slots serving to permit insertion thereinto from below of rollers upon which it is envisaged that said objects may be deposited and made to roll, thus allowing their being lifted—or off-loaded—whilst within said container; and

— further conveyors positioned up-line and down-line of the roller-conveyor aforesaid, whose function is combined with that of means for bringing about the transverse displacement of said objects, and whose purpose is that of arranging the latter in orderly rows and loading them into the container—during the loading stage—and off-loading them one-by-one during the off-load stage.

The invention described herein relates to storage plant for objects—track-links, in particular—which may be incorporated into a production line between two consecutive processing units or centres and along which said objects may be made to travel by passing over surfaces created by roller-conveyors and comprising:

— at least one apparatus receiving and delivering said objects from/to each of the roller-conveyor surfaces and at least one container designed to receive said objects arranged in orderly rows from a roller-conveyor surface positioned upstream, store said objects and discharge them onto a roller-conveyor surface positioned downstream, according to requirements; said apparatus comprising:

— a first roller-conveyor designed to connect said upstream roller-conveyor surface with said down-stream surface; two further short roller-conveyors positioned parallel with and alongside the ends of said first roller-conveyor; said short roller-conveyor being of all but equal width to the utilisable internal width of said container, and located at a distance one from the other marginally greater than the length of the rectangular bottom-surface of said container; a roller-bed interconnecting said short roller-conveyors and able to accommodate a container such that the rollers thereof may enter singly into respective slots located upon said bottom surface of said container and protrude therefrom upwardly at least one device designed to bring about the sideways transfer of said objects from the first roller-conveyor to the upstream short roller-conveyor, arranging said objects in orderly rows; and at least one device for removal of said objects one by one from the "parcel" (of links) lying upon said downstream short roller conveyor and for their transfer thence to said first roller conveyor; characterised in that said apparatus makes provision for the accommodation and moving about of a number of like containers, and comprises:

— an elevator device designed for the vertical transfer of said containers from a load roller-bed positioned upwardly of and at right-angles to said first roller-conveyor, to an off-load roller-bed positioned below—or vice-versa; said containers being carried singly by said device with their longer sides disposed parallel to said first roller-conveyors, in such a way as to remain vertically-positioned within the space existing between said short roller-conveyors and to lie exactly above and/or below said interconnecting roller-bed when the latter is in working position; said roller-bed being equipped with drive-rollers and being capable of movement as a whole back and forth in a horizontal plane between said working position and a further position located externally of said elevator device, when operated; and in that said containers—whether full or empty—are supplied to or removed from said roller-beds as required from outside the apparatus.

The invention will now be described by way purely of example, with the aid of accompanying drawings, in which:

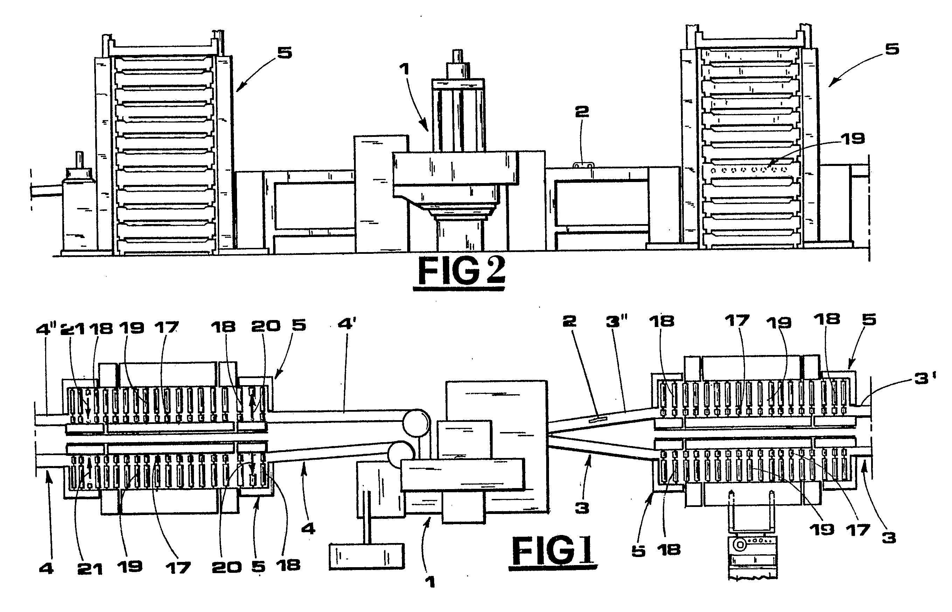

fig 1 shows a schematic diagram of part of a production line wherein plant to which the invention relates may be incorporated between consecutive processing centres;

fig 2 shows a first embodiment of the invention as in fig. 1, in vertical elevation, from one side;

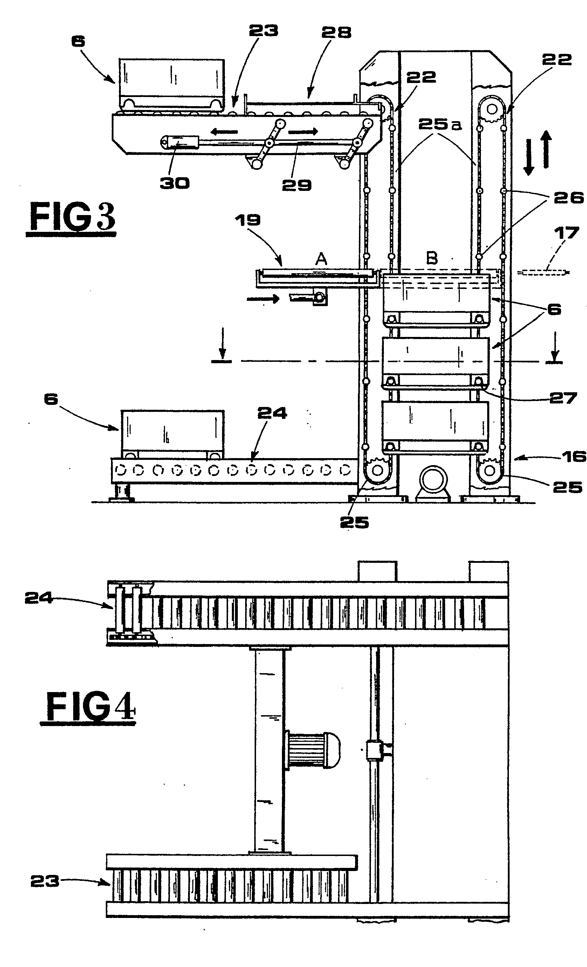

fig 3 shows a cutaway from the front and on enlarged scale, of said first embodiment;

fig 4 shows the contents of fig 3 on the same scale, cutaway and in plan;

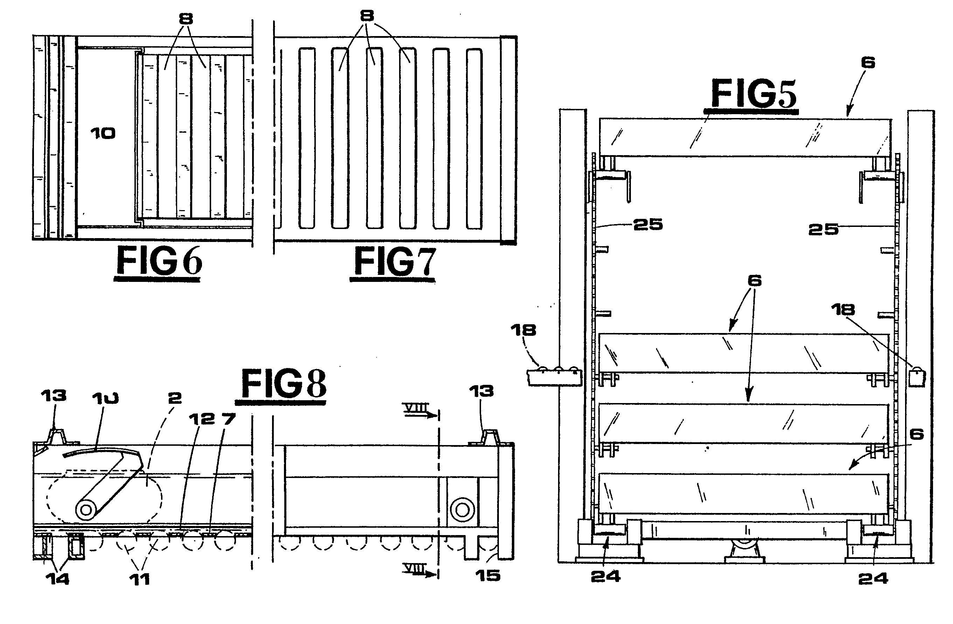

fig 5 shows fig 3 and fig 4 still on the same scale, and in side-elevation;

fig 6 shows the plan from above of a container relative to the first embodiment illustrated;

fig 7 shows the view from beneath of the container in fig 6;

fig 8 shows a side-elevation of fig 6 in cutaway;

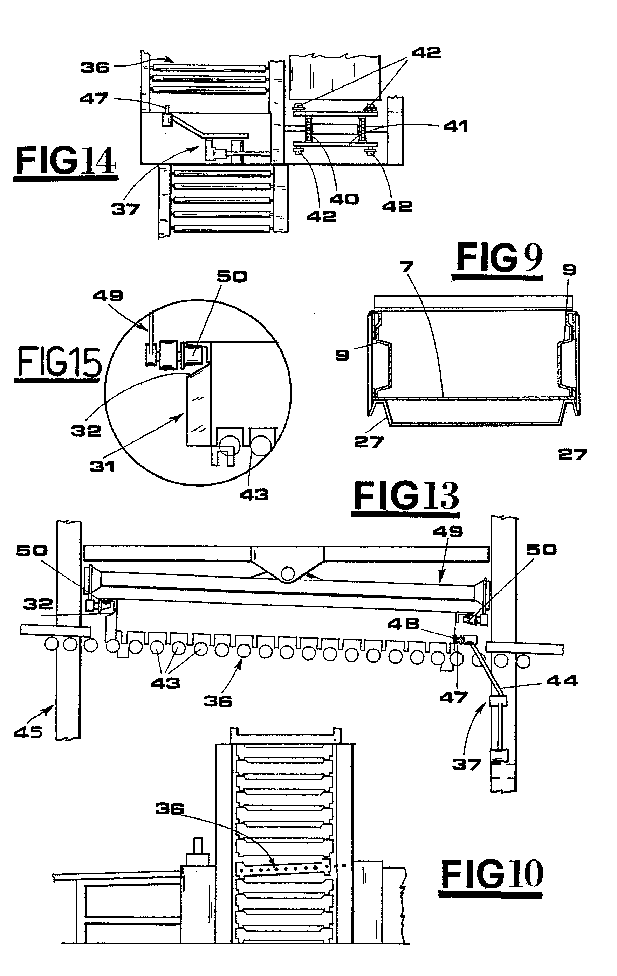

fig 9 shows a section through VIII—VIII in fig 8, in cutaway;

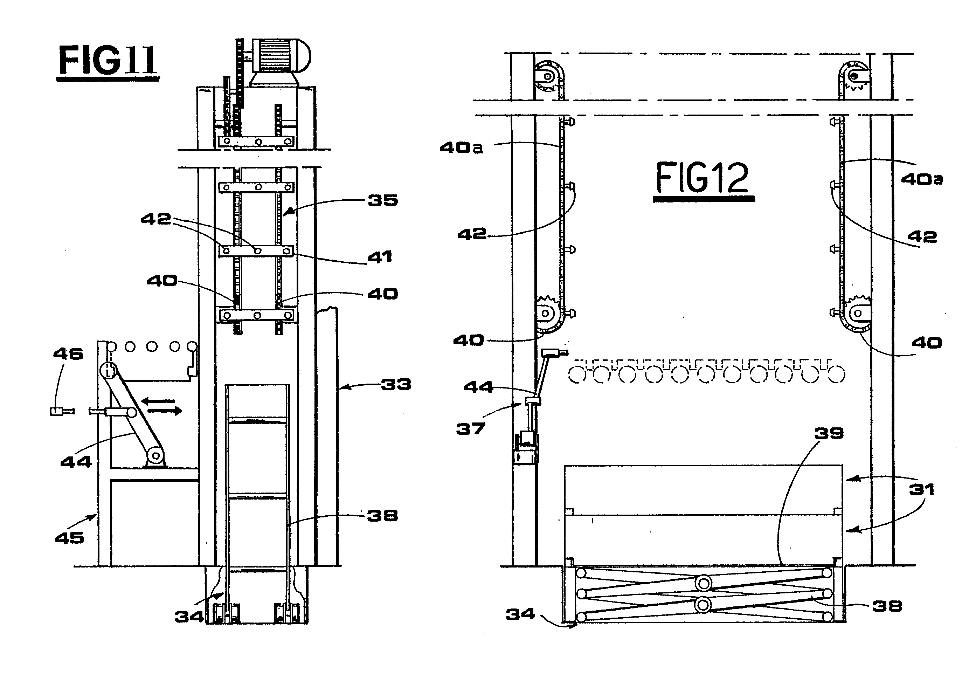

fig 10 shows a second embodiment of the invention, being a part of fig 1 in side elevation;

fig 11 shows a view from the front of said second embodiment, cutaway, and on enlarged scale;

fig 12 shows a side view of fig 11 in cutaway;

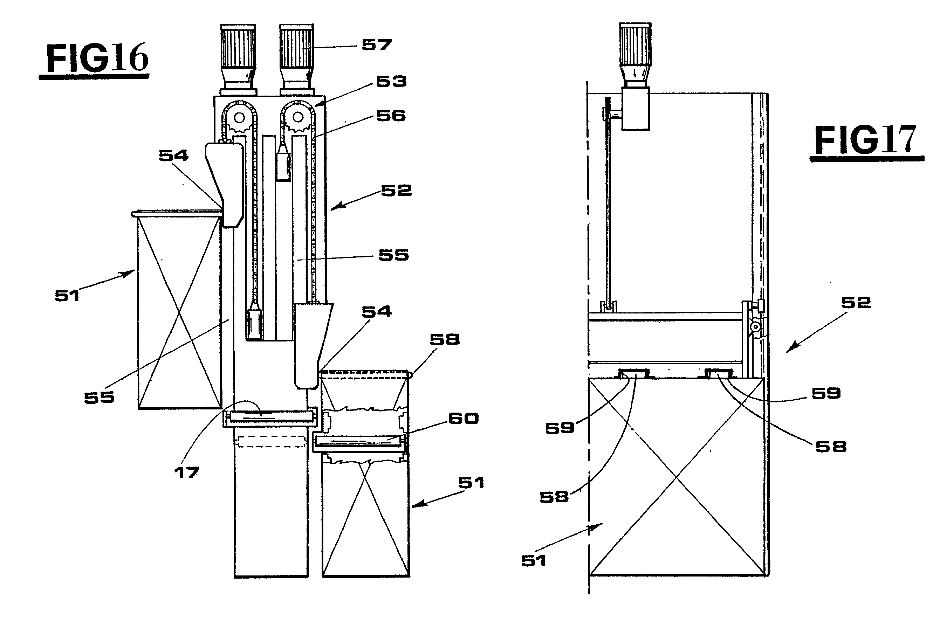

fig 13 shows a part of fig 12 on enlarged scale and in a different working position;

fig 14 shows an enlargement of a detail in figs 11, 12 and 13;

fig 15 shows an enlarged detail of fig 13;

fig 16 shows a third embodiment of the invention from the front, and in cutaway;

fig 17 is a side view of fig 16.

With reference to the drawings, 1 denotes a processing unit, or centre, for track-links 2, which forms a part of the production line for such links. The centre 1 connects with further centres preceding and following in the line by way of roller-type conveyors 3 and 4, provision being made for two link-storage plants 5 arranged symmetrically, one to each said conveyor.

In the first embodiment, each plant 5 comprises a large number of identical containers 6 designed to hold a number of links 2 arranged in orderly rows to as to form "parcels" of a size slightly less than that of the utilisable container-space.

Each container comprises: a rectangular bottom-surface 7 on which to deposit said links, which exhibits a number of identical and parallel rectilinear slots traversing almost the entire width of the container and lying perpendicular to its longer sides; two opposed side-walls 9 disposed parallel to one another and fixed to said longer sides; two movable frontal walls 10 disposed symmetrically at the two remaining opposed sides of said bottom-surface 7 and hinged to said side-walls 9.

The slots 8 are of size such as will accommodate at least a part of the conveyors' parallel rollers 11 so as to permit their protruding above bottom-surface 7 into the container, creating a uniform mobile surface 12.

Frontal walls 10 are disposed at right-angles to side-walls 9, and when in fully-opened position, permit the passage of links 2 borne up by said mobile surface 12 and travelling in a direction perpendicular to the rollers 11 thereof.

Within the container 6 itself, links 2 may be introduced, carried along longitudinally in parcels, and stored and removed as required.

Each of the containers exhibits wedge-like protrusions 13 at the upper side, and support elements 14 at the lower, as well as projecting seats 15 designed to accommodate said wedge-like protrusions 13, thus allowing said containers to be stacked one on top of the other.

Said protrusions and seats are located at the shorter container sides, the containers 6 themselves being introduced into and received by an apparatus 16 which positions them such that they may be loaded up with links 2 arriving on roller-conveyor surface 3' or 4' up-line (container empty) or emptied (container full), the links removed being despatched onto a roller-conveyor-surface 3" or 4" located down-line thereof.

Each apparatus 16 comprises: a roller-conveyor 17 connecting up-line roller-conveyor surface 3' or 4' to down-line roller-conveyor surface 3" or 4"; two short conveyors 18 with drive-rollers, located parallel with and alongside the ends of said roller conveyor 17, and of width all but equal to the utilisable inside width of said containers 6, being disposed thus at the ends of conveyor 17 at a distance one from the other marginally greater than the length of the rectangular bottom-surface 7 of said container 6; provision being made further for a roller-bed 19 with drive-rollers 11 interconnecting the two short roller-conveyors 18, able to accommodate a single container 6 in such a way that rollers 11 may insert into respective slots 8 offered by bottom-surface 7, and protrude upwards from same; also, a device for sideways transfer of the single links 2 from the sides of roller-conveyor 17 onto said short roller-conveyors 18—or vice-versa—as per the arrows denoting 20 and 21; and lastly, an elevator device 22 for the vertical transfer of said containers 6 from a load roller-bed 23 positioned upwardly of and at right-angles to said roller-conveyors 17, to an off-load roller-bed 24 positioned below—and vice-versa.

The elevator device 22 comprises two pairs of symmetrically-disposed and identical looped chains 25 whose vertical opposed branches 25a move synchronously in the same direction.

Said pairs of chains 25 are furnished with pins 26 disposed symmetrically and spaced apart at equal distances, destined to engage in appropriate seats 27 offered by the smaller sides of each container 6.

Each container is thus borne up by four pins 26 and transferred through a vertical path by the movement of the chains 25 in such a way as to remain parallel at all times with roller-conveyor 17 and correspond in the vertical with that space existing between said short conveyors 18.

Roller-bed 19 aforementioned is able to move as a whole within a horizontal plane, between a position denoted A lying outside the chains 25 and a working position B between the latter. Thus, in position B, it becomes possible to deposit a container 6 on the roller-bed 19 for the purposes of loading/off-loading; in fact, when in this position, roller-bed 19 interconnects the two short conveyors 18 perfectly, permitting transit of the links 2 across for storage or for removal. A device 28 located alongside load roller-bed 23 transfers single containers 6 from the latter to the topmost point of opposed chain-branches 25a, and vice-versa.

The container-moving device 28 has its movements synchronised with that of the chains 25 by a timed mechanism 29 driven by actuator-cylinder 30.

Both load roller-bed 23 and off-load roller-bed 24 consist of a pair of tracks fitted with drive-rollers which provide the support necessary for bearing up containers 6 by their support elements 14.

The storage plant of the invention operates as follows:

Empty containers 6 are deposited one at a time by a forklift-truck onto the load roller-bed 23. They are then transferred as and when required to the topmost point of the elevator device 22 and located on the carrying-pins 26 offered by opposed chains 25 by means of container-moving device 28 whose operation is synchronised with the vertical motion of said chains.

During the loading stage, chains 25 descend by one step after each single container has been loaded.

This is rendered possible by the roller-bed 19 being drawn back from working position B to outer position A until such time as a new empty container 6 arrives at the point hitherto occupied by the container just loaded. At this point, roller-bed 19 is made to move forward from position A to position B and the container centred thereon in such a way that rollers 11 may protrude upwards thereinto through bottom-surface 7.

Loading of the new container with links 2 comes about automatically. In fact, on reaching the end of short roller-conveyors 18, links arriving on roller-surface 3' or 4' are pushed sideways thereonto in the direction of arrow 20 so as to form a "parcel" whose width will be slightly less than that of the internal container-width 6.

The "parcel" thus formed is then transferred by the short-conveyor 18 drive-rollers at first, and then by those of roller-bed 19, being carried along mobile surface 12 supported across the entire container-width.

The operation repeats each time until the point at which a container is filled with links, whereupon roller-bed 19 is drawn back to position A, and a new container brought up/down by chains 25 to take the place of the previous one. Containers 6 thus loaded with links are then deposited on the off-load roller-bed 24 from whence they may be picked up by a fork-lift truck.

Should the processing centre 1 require links 2, then having displaced the container's movable wall 10, the parcel within the container 6 can be transferred by the drive-rollers 11 of roller-bed 19 to the short roller-conveyor down-line therefrom 18.

From here, a device makes provision for sideways transfer of the links 2 one at a time from the parcel—as per arrow 21—onto conveyor 17, from where the links 2 are despatched singly along roller-surface 3" to the centre 1.

When in the apparatus 16, containers 6 may move in one of two directions, according to the production-tempo requirements, and may be introduced and removed filled or empty without interfering with the smooth operation of same.

When the number of links per unit-of-time required by the processing centre 1 coincides with that reached by the two associated storage plants 5, then apparatus/s 16 will begin operation, and the single links 2 move along roller-surface 3', onto conveyor 17, moving thence onto roller-surface 3" and into the processing centre 1.

A second embodiment of the invention envisages the use of containers 31 which differ from containers 6 inasmuch as they have an outer channel 32 disposed parallel to the uppermost edges of the shorter container sides.

Containers 31 are introduced into an apparatus 33 which performs the same basic functions of apparatus 16 to all intents and purposes, but by dissimilar means, and comprises:

— a first elevator device 34 for the vertical transfer of containers 31 stacked one on top of the other up to the level of roller-conveyors 17 and 18; a second elevator device 35 disposed directly above the first, bearing up and transferring single containers 31 through a vertical path; an interconnecting roller-bed 36 which differs from the corresponding roller-bed 19 in apparatus 16 inasmuch as it comprises idle rollers 43 and is inclined down the direction of movement and located fixedly between the two short roller-conveyors 18; two devices 37 synchronised with elevator devices 34 and 35, each bringing about sideways transfer of single containers 31 from said devices and depositing them onto roller-bed 36—and vice-versa.

The first elevator device utilises an articulated jib mechanism 38 actuated by hydraulic means, having a horizontal load platform 39 on top of which containers 31 may sit, stacked one on top of the other.

Two such stacks of containers 31 can be loaded onto/off-loaded from the platform 39 by means of a fork lift truck.

The second elevator device 35 consists of two pairs of identical and symmetrically-disposed looped chains 40 with opposed vertical branches 40a moving synchronously and at equal step.

Said chains 40 have rigid transverse elements 41 furnished with equi-distant pins 42 spaced along the chains at regular intervals, which engage in either channel 32 of containers 31. Each container 31 is thus supported by at least two pairs of symmetrically-disposed pins 42 offered by opposed branches 40a and is transferred vertically by said chains 40 in such a way as to remain parallel with roller-conveyors 17 and 18.

Each transfer device 37 consists of a lever 44 hinged to a fixed frame 45 lying below roller-bed 36 and rotating about an axis all but parallel to the direction of movement defined by said roller-bed. Lever 44 is actuated by a cylinder 46 and furnished at its upper end with an idle pin 47 which engages in a seat 48 at the vertical corner-joins of said container 31.

An oscillating frame 49 located above roller-bed 35 is furnished at its ends with two sets of small rollers 50, of shape and spacing such as to permit entry into the two symmetrical channels 32 with which each container 31 is provided.

Frame 49 hinges with the upper part of frame 45, rotating about an axis parallel to the axes of said idle rollers 43. In transferring a single container 31 from elevator devices 34 and 35 to roller-bed 36, the lever 44 pushes container 31 sideways out of the elevator devices. Channels 32 are able to accommodate the sets of small rollers 50 by which said container 31 is supported and upon which it slides until lying exactly above roller-bed 36. Once in this position, said pin 47 pushes downward on the sides of seat 48, inclining both frame 49 and container 31 in such a way as to create the necessary gradient in said roller-bed 36.

A slight lowering of the sets of small rollers 50 leaves container 31 in the working position, with rollers 43 protruding upwards thereinto through the slots in its bottom-surface 7.

Transfer in the reverse direction from roller-bed 36 to elevator devices 34 and 35 is carried out in a similar fashion by the second device 37 located at the other end of said roller-bed 36. Empty or full containers 31 are stacked onto platform 39 and removed one by one therefrom by said chains 40 which have their movement synchronised with the vertical movement of mechanism 38 aforesaid.

The transfer device 37 removes one container 31 at a time from chains 40, transferring them to roller-bed 36 where they are loaded as already described and lifted/lowered by elevator device 34. Chains 40 and device 34 descend one step, and the cycle is duly repeated.

Unlike the first embodiment, movement of the parcel of links along roller-bed 36 comes about by dint of gravity, since the rollers are idle, and the bed inclined. Operation is made more secure with this system, as the likelihood of slip between the bottom surface of a parcel of stationary links and drive rollers beneath is eliminated.

A third embodiment of the invention envisages the use of a multilevel container 51 created by stacking a number of like containers similar to 6 and 31 so as to form a single multi-level unit.

These multilevel containers 51 are introduced into an apparatus 62 which performs the same basic function to all intents and purposes of apparatus 16 and 33 aforesaid, though by dissimilar means, and comprises:

— an elevator device 53 for the vertical transfer of said multilevel container 51 positioned alongside roller-conveyor 17 between conveyors 18 such that the longer sides of bottom-surfaces 7 are disposed parallel therewith.

Elevator device 53 consists of a fork-lift 54 travelling vertically along slides 55 and drawn by a chain 56 driven by a motor 57, or some other similar device. The parallel and horizontal prongs of the fork-lift 54 insert into hollow seats 59 located at the top end of the multi-level container itself 51.

Apparatus 52 further comprises a roller-bed 60; disposed horizontally and furnished with drive rollers, similarly to roller-bed 19 in apparatus 16 aforesaid.

Roller-bed 60 is likewise able to transfer through a horizontal plane, when operated, from position C to a working position D, where it lies beneath the one bottom-surface 7 of the multi-level container 51. Each of the levels is then loaded as described. Once a level is filled with links, the roller-bed 60 returns from working position D out to position C, and the fork-lift 54 causes container 41 to descend by one step, the container itself being introduced and/or removed when completely full by means of a fork-lift truck.

**Claims**

1. Storage plant for objects, in particular for track links which may be incorporated into a production line between two consecutive processing units or centres (1) and along which said objects may be made to travel by passing over surfaces created by roller-conveyors (3) and (4), and comprising:

— at least one apparatus (16) receiving and delivering said objects at each of the roller-conveyor surfaces (3) and (4) and at least one container (6) designed to receive said objects arranged in orderly rows from a roller-conveyor surface (3') or (4') positioned upstream, store said objects and discharge them onto a roller-conveyor surface (3") or (4") positioned down-stream, according to requirements; said apparatus comprising:

— a first roller-conveyor (17) designed to connect said upstream roller-conveyor surface (3' or 4') with said down-stream surface (3" or 4"); two further short roller-conveyors (18) positioned parallel with and alongside the ends of said first roller-conveyor (17); said short roller-conveyors (18) being of all but equal width to the utilisable internal width of said container (6), and located at a distance one from the other marginally greater than the length of the rectangular bottom-surface (7) of said container; a roller-bed (19) interconnecting said short roller-conveyors (18) and able to accommodate a container (6) such that rollers (11) thereof may enter singly into respective slots (8) located in said bottom surface (7) of said container and protrude therefrom upwardly; at least one device designed to bring about the sideways transfer of said objects from the first roller-conveyor (17) to the upstream short roller-conveyor (18), arranging said objects in orderly rows; and at least one device for withdrawal of said objects one by one from the "parcel" lying upon the downstream short roller conveyor (18) and for their transfer thence to said first roller conveyor (17); characterised in that said apparatus (16) makes provision for the accommodation and moving-about of a number of like containers (6), and comprises:

— an elevator device (22) designed for the vertical transfer of said containers (6) from a load-roller-bed (23) positioned upwardly of and at right-angles to said first roller-conveyor (17), to an off-load roller-bed (24) positioned below, or vice-versa; said containers (6) being carried singly by said device (22) with their longer sides disposed parallel to said first roller-conveyor (17), in such a way as to remain vertically-positioned within the space existing between said short roller-conveyors (18) and to lie exactly above and/or below said interconnecting roller-bed (19) when the latter is in working position; said roller-bed (19) being equipped with drive-rollers and being capable of movement as a whole back and forth in a horizontal plane between said working position and a further position located externally of said elevator device (22), when operated; and in that said containers (6)—whether full or empty—are supplied to or removed from said roller-beds (23) and (24) as required from outside the apparatus.

2. Storage plant as in claim 1 characterised in that said containers (6) have wedge-like protrusions (13) uppermost and projecting support elements at their lower side with seats (15) accommodating said wedge-like protrusions (13) allowing the containers (6) to be stacked one on top of the other; said protrusions (13), said elements (14) and said seats (15) being disposed at the shorter sides of the single containers (6), and parallel therewith.

3. Storage plant as in the preceding claims, characterised in that said elevator device (22) comprises two pairs of symmetrically-disposed and identical looped chains 25 whose opposed vertical branches (25a) move synchronously in the same direction; said chains (25) furnished with a number of pins (26) which engage in special seats (27) offered by each of said containers (6); and a device (28) for the transfer of single containers (6) from said load roller-bed (23) to the top of said elevator device (22), synchronously with the movement of said chains (25).

4. Storage plant as in claims 1 and 2 characterised in that the apparatus (33) comprises: a first elevator device (34) for the transfer of containers (31) stacked one on top of the other, in a vertical direction up to the level of said roller-conveyors (17); a second elevator device (35) lying exactly above the first, bearing up each of said containers (31) and transferring them singly in a vertical direction; roller-bed (36) being furnished with idle rollers and inclined down its direction of movement in fixed position between said short conveyors (18); said containers disposed on said elevator devices (34 and 35) alongside said roller-beds (36) with their longer sides parallel thereto; and at least one device (37), synchronised with said elevator devices (34 and 35), bringing about sideways transfer of single containers (31) from said elevator devices (34 and 35) and deposition thereof upon roller-beds (36)—and vice-versa.

5. Storage plant as in claims 1 and 2, characterised in that it comprises a number of containers disposed one on top of the other and connected thus so as to form a single multi-level container (51).

6. Storage plant as in claims 1, 2 and 5 characterised in that said apparatus (52) comprises: an elevator device (53) for vertical transfer of said multilevel container (51), positioned alongside the roller-conveyor (17) disposed between said short conveyors (18) such that the longer sides of the single bottom-surfaces (7) lie parallel thereto; said device (53) equipped with a fork-lift (54) having parallel and horizontal prongs (58); said multilevel container (51) having hollow seats (59) uppermost able to accommodate said prongs when inserted thereinto.

**Patentansprüche**

1. Speicheranlage für Objekte, insbesondere für Raupenkettenglieder, die in einer Produktionsanlage zwischen zwei aufeinanderfolgenden Fertigungseinheiten oder Zentren (1) montiert wird und entlang derselben die genannten Objekte über Oberflächen geleitet werden, die aus Rollentransportern (3) und (4) bestehen und wie folgt enthalten:

— Mindestens ein Geräte (16), das die genannten Objekte aufnimmt und an eine jede der Rollentransportflächen (3) und (4) weiterleitet, sowie mindestens einen Behälter (6), der dazu dient, die in ordentlichen Gruppen ausgerichteten genannten Objekte von einer oberhalb angeordneten Rollentransportfläche (3') oder (4') zu übernehmen, diese genannten Objekte zu sammeln und sie an eine Rollentransportfläche (3") oder (4") weiterzugeben, die sich weiter unten befindet, und zwar je nach den Anforderungen, wobei das genannte Gerät wie folgt enthält:

— Einen ersten Rollentransporter (17), der dazu dient, die genannte, oberhalb angeordnete Transportfläche (3') oder (4') mit der genannten, unterhalb angeordneten Transportfläche (3") oder (4") zu verbinden; zwei weitere kurze Rollentransporter (18), die parallel zu dem genannten ersten Rollentransporter (17) und an den Enden desselben angeordnet sind, wobei die genannten kurzen Rollentransporter (18) die gleiche Breite aufweisen wie die interne Nutzbreite des genannten Behälters (6) und sie mit einem Abstand voneinander angebracht sind, der an seinem Rand breiter ist als die Länge der rechteckigen Bodenfläche (7) des genannten Behälters; eine Rollenfläche (19), die die genannten kurzen Rollentransporter (18) miteinander verbindet und einen Behälter (6) aufnehmen kann, und zwar so, dass die Rollen (11) sich einzeln in entsprechende und in der genannten Bodenfläche (7) des genannten Behälters (6) angeordnete Schlitze einfügen und sich von dort aus nach oben erstrecken; mindestens eine Vorrichtung, die dazu dient, durch seitliche Verschiebung der genannten Objekte diese von dem ersten Rollentransporter (17) an den davor angeordneten kurzen Rollentransporter (18) zu leiten, wobei die genannten Objekte zu ordentlichen Gruppen ausgerichtet werden; sowie mindestens eine Vorrichtung zum Entnehmen der genannten Objekte eines nach dem anderen aus der "Gruppe", die sich auf dem anschliessend angeordneten kurzen Rollentransporter (18) befindet, und zum Weiterleiten desselben von dort zu dem genannten ersten Rollentransporter (17), dadurch gekennzeichnet, dass in dem genannten Gerät (16) Massnahmen zum Anordnen und Weiterleiten einer Anzahl von Behältern (6) getroffen werden und dieses Gerät wie folgt enthält:

— Eine Hebevorrichtung (22), die zum vertikalen Transport der genannten Behälter (6) dient, und zwar von einer Lade-Rollenfläche (23), die oberhalb und rechtwinklig zu dem genannten ersten Rollentransporter (17) angeordnet ist, zu einer Entlade-Rollenfläche (24), welche sich darunter befindet oder auch umgekehrt, wobei die genannten Behälter (6) einzeln durch die genannte Vorrichtung (22) geladen werden, und zwar so, dass sie mit ihrer Längsseite parallel zu dem genannten ersten Rollentransporter (17) stehen, so dass sie vertikal innerhalb des Raumes angeordnet sind, der sich zwischen den genannten kurzen Rollentransportern (18) und somit genau oberhalb und/oder unterhalb dre genannten verbindenden Rollenfläche (19) befindet, wenn letzters in der Arbeitsposition ist, wobei die genannte Rollenfläche (19) befindet, wenn letztere in und in der Lage ist, sich auf einer horizontalen Ebene vollkommen zurückzuziehen oder sich nach vorn zu bewegen, das heisst zwischen der genannten Arbeitsposition und einer weiteren, ausserhalb der genannten Hebevorrichtung (22) liegenden Position, wenn die Hebevorrichtung (22) in Betrieb ist, wobei die genannten Behälter (6), ob voll oder leer, durch die genannten Rollenflächen (23) und (24) zugeführt oder abtransportiert werden, je nach Abruf von ausserhalb des Gerätes.

2. Speicheranlage nach Patentanspruch 1, dadurch gekennzeichnet, dass die genannten Behälter (6) keilförmige Vorsprünge (13) an ihrer Oberseite aufweisen sowie an der Unterseite hervorstehende Supportelemente mit Sitzen (15), in welche die genannten keilförmigen Vorsprünge (13) hineingreifen und es den Behältern (6) so ermöglichen, einer auf dem anderen aufgestapelt zu sein, wobei die genannten Vorsprünge (13), die genannten Supportelemente (14) und die genannten Sitze (15) an den kürzeren Seiten der einzelnen Behälter (6) und parallel zu diesen angeordnet sind.

3. Speicheranlage nach den vorstehenden Patentansprüchen, dadurch gekennzeichnet, dass die genannte Hebevorrichtung (22) zwei Paare von symmetrisch angeordneten und identischen ringförmig geschlossenen Ketten (25) enthält, deren gegenüberliegende vertikale Trums (25a) sich synchron in der gleichen Richtung bewegen, wobei die genannten Ketten (25) mit einer Anzahl von Zapfen (26) versehen sind, welche sich in spezielle Sitze (27) in einem jeden der genannten Behälter (6) einfügen, sowie mit einer Vorrichtung (28) zum Weiterleiten der einzelnen Behälter (6) von der genannten Lade-Rollenfläche (23) zu dem oberen Teil der genannten Hebevorrichtung (22), und zwar synchron zu der Bewegung der genannten Ketten (25).

4. Speicheranlage nach den Patentansprüchen 1 und 2, dadurch gekennzeichnet, dass das genannte Gerät (33) wie folgt enthält: Eine erste Hebevorrichtung (34) zum Weiterleiten der einer auf dem anderen gestapelten Behälter (31) in einer vertikalen Richtung bis zu der Ebene der genannten Rollentransporter (17); eine zweite Hebevorrichtung (35), die genau über der ersten angeordnet ist und jeden der genannten Behälter (31) übernimmt und diese einzeln in vertikaler Richtung weiterführt; eine Rollenfläche (36) mit leerlaufenden Rollen, welche in der Laufrichtung in einer festen Position geneigt ist, und zwar zwischen den genannten kurzen Rollentransportern (18), wobei die genannten Behälter auf den genannten Hebevorrichtungen (34) und (35) entlang an den genannten Rollenflächen (36) angeordnet werden, und zwar mit ihren langen Seiten parallel zu diesen; und mindestens eine synchron zu den genannten Hebevorrichtungen (34) und (35) arbeitende Vorrichtung (37), welche die seitliche Verschiebung der einzelnen Behälter (31) von den genannten Hebevorrichtungen (34) und (35) zu den oberen Rollenflächen (36) und umgekehrt vornimmt.

5. Speicheranlage nach den Patentansprüchen 1 und 2, dadurch gekennzeichnet, dass sie eine Anzahl von Behältern aufweist, die einer auf dem anderen gestapelt und so miteinander verbunden sind, dass sie einen einzigen Behälter (51) mit mehreren Ebenen ergeben.

6. Speicheranlage nach den Patentansprüchen 1, 2 und 5, dadurch gekennzeichnet, dass das genannte Gerät (52) wie folgt enthält: Eine Hebevorrichtung (53) für den vertikalen Transport des genannten Behälters (51) mit mehreren Ebenen, die neben dem Rollentransporter (17) und zwischen den genannten kurzen Rollentransportern (18) angeordnet ist, so dass die längeren Seiten der einzelnen Bodenflächen (7) parallel zu diesen zu liegen kommen, wobei die genannte Vorrichtung (53) mit einer Gabel (54) versehen ist, die parallele und horizontale Zinken (58) aufweist, und wobei der genannte Behälter (51) mit mehreren Ebenen an seiner oberen Seite Hohlsitze (59) hat, die dazu dienen, die genannten Zinken (58) aufzunehmen.

## Revendications

1. Dispositif pour l'emmagasinage d'objets, notamment pour des maillots de chenilles, du type pouvant être incorporé dans une ligne de production, entre deux unités ou postes de travail (1) successifs et le long duquel lesdits objets se déplacent passant sur des surfaces de transport mobiles créées par des transporteurs à rouleaux (3) et (4) et comportant:

— du moins un appareil (16) qui reçoit et délivre lesdits objets, à chacune des surfaces mobiles de transport (3) et (4) et du moins un récipient (6) destiné à recevoir lesdits objets, disposés successivement à la file, d'une surface mobile de transport (3') ou (4') qui se trouve en amont, à les emmagasiner et à les délivrer à une surface mobile de transport (3″) ou (4″) aui se trouve en aval, suivant les nécessités, ledit appareil comportant:

— un premier transporteur à rouleaux (17) destiné à relier lesdites surfaces mobiles de transport ((3' ou (4') en amont avec lesdites surfaces mobiles de transport (3″) ou (4″) en aval; deux autres transporteurs à rouleaux (18) de courte longueur disposés parallèles à et à côté des extrémités du premier transporteur à rouleaux (17); les deux courts transporteurs à rouleaux (18) ayant sensiblement une largeur égale à la largeur intérieure utilisable du récipient (6) et étant espacés l'un de l'autre d'une distance légèrement plus élevée que la longueur de la surface de fond rectangulaire (7) dudit récipient; une ligne de rouleaux (19) reliant les deux courts transporteurs à rouleaux (18) et étant en mesure de recevoir un récipient (6) de manière que ses rouleaux (11) peuvent entrer individuellement dans des rainures correspondantes (8) dont ladite surface de fond (7) du récipient (6) est pourvue et déborder au-dessus de celle-ci; du moins un dispositif destiné à transférer latéralement lesdits objets du premier transporteur à rouleaux (17) au transporteur à rouleaux de courte longueur (18) placé en amont, en disposant lesdits objets successivement à la file; et au moins un dispositif destiné à prélever lesdits objets un par un du "paquet" qui repose sur le court transporteur à rouleaux (18) disposé en aval et à transférer ensuite un objet à la fois au premier transporteur à rouleaux (17); caractérisé en ce que l'appareil (16) est conçu de manière qu'il peut recevoir et déplacer une pluralité de récipients (6) similaires et qu'il comporte:

— un dispositif élévateur (22) destiné à déplacer verticalement lesdits récipients (6) d'une ligne de rouleaux de chargement (23) disposée au-dessus de et perpendiculairement au premier transporteur à rouleaux (17), à une ligne de rouleaux de déchargement (24) disposée au-dessous, ou viceversa; lesdits récipients (6) étant individuellement portés par ledit dispositif (22) avec leurs grands côtés disposés parallèles audit premier transporteur à rouleaux (17) de manière qu'ils se trouvent positionnés verticalement dans l'espace existant entre lesdits courts transporteurs à rouleaux (18) et qu'ils reposent exactement au-dessus et/ou au-dessous de ladite ligne de rouleaux (19) de liaison quand cette dernière est dans sa position de travail; ladite ligne de rouleaux (19) étant munie de rouleaux d'actionnement et étant en mesure de se déplacer dans son ensemble en avant et en arrière dans un plan horizontal entre ladite position de travail et une autre position qui se trouve à l'extérieur dudit dispositif élévateur (22) quand il est monoeuvré; et en ce que lesdits récipients (6)—soit pleins soit vides—sont alimentés à ou enlevés desdites lignes de rouleaux de chargement (23) ou de déchargement (24), comme demandé de l'extérieur de l'appareil.

2. Dispositif d'emmagasinage selon la revendication 1, caractérisé en ce que lesdits récipients (6) sont munis à leur partie supérieure de saillies en forme de coin (13) et à leur partie inférieure d'éléments d'appui saillants et pourvus de logements (15) destinés à recevoir lesdites saillies en forme de coin (13), ce qui permet aux récipients (6) de se disposer en pile l'un sur l'autre; lesdites saillies (13), lesdits éléments (14) et logements (15) se trouvant sur les petits côtés de chaque récipient (6) et étant parallèles aux mêmes récipients.

3. Dispositif d'emmagasinage selon la revendication 2, caractérisé en ce que ledit dispositif élévateur (22) comporte deux paires de chaînes (25) sans fin similaires et disposées symétriquement l'une par rapport à l'autre, dont les branches verticales en regard (25a) sont pourvues du même mouvement synchronisé dans la même direction et selon ls même sens; lesdites chaînes étant munies d'une pluralité de chevilles (26) qui s'engagent dans des logements appropriés (27) prévus dans chacun desdits récipients (6); et un dispositif de transport (28) destiné à transférer, en synchronisme avec le mouvement des chaînes (25), chaque récipient (6) depuis ladite ligne de rouleaux de chargement (23) jusqu'au sommet dudit dispositif élévateur (22).

4. Dispositif d'emmagasinage selon les revendications 1 et 2, caractérisé en ce que l'appareil (33) comporte: un premier dispositif élévateur (34) destiné à transférer les récipients (31) empilés l'un sur l'autre, selon une direction verticale jusqu'au niveau desdits transporteurs à rouleaux (17); un deuxième dispositif élévateur (35) placé exactement au-dessus du premier, destiné à supporter chacun desdits récipients (31) et à les transférer individuellement selon une direction verticale; la ligne de rouleaux (36) comportant des rouleaux fous et étant disposée inclinée selon sa direction de mouvement, dans une position fixe entre lesdits courts transporteurs (18); lesdits récipients étant disposés sur lesdits dispositifs élévateurs (34 et 35) à côté de ladite ligne de rouleaux (36) avec leurs grands côtés parallèles à celle-ci; et du moins un dispositif de transfert (37) en synchronisme avec les dispositifs élévateurs (34 et 35) destiné à transférer latéralement chaque récipient (31) depuis lesdits dispositifs élévateurs (34 et 35) et à le déposer sur ladite ligne de rouleaux (36) de liaison et vice-versa.

5. Dispositif d'emmagasinage selon les revendications 1 et 2, caractérisé en ce qu'il comporte une pluralité de récipients empilés l'un sur l'autre, ces récipients étant solidairement reliés l'un à l'autre de manière qu'ils forment un seul récipient (51) à plusieurs étages.

6. Dispositif d'emmagasinage selon les revendications 1, 2 et 5, caractérisé en ce que l'appareil (52) comporte: un dispositif élévateur (53) destiné à transférer verticalement ledit récipient à plusieurs étages (51) disposé à côté dudit transporteur à rouleaux (17) qui est introduit entre les deux courts transporteurs (18), de manière que les grands côtés de chaque surface de fond (7) soient parallèles à ceux-ci; ledit dispositif (53) étant muni d'un organe de levage à fourches (54) ayant des dents parallèles et horizontales; ledit récipient (51) à plusieurs étages étant pourvu à sa partie supérieure de logements creux (59) susceptibles de loger à leur intérieur lesdites dents qui sont destinées à pénétrer dans ceux-ci.

FIG 2

FIG 1

0 025 776

**FIG 3**

**FIG 4**

FIG5

FIG6

FIG7

FIG8

FIG 14

36
47
37
42
42
41
40
42
42

FIG 15
49
50
32
31
43

FIG 9
7
9
9
27
27

FIG 13
50
49
50
32
48
43
36
44
47
45
37

FIG 10
36

FIG12

FIG11

**FIG16**

57

53

56

54

52

55

51

55

54

58

17

60

51

**FIG17**

52

59

59

58

58

51